(19) Europäisches Patentamt
European Patent Office
Office européen des brevets

(11) Publication number: 0 195 818 B1

(12) # EUROPEAN PATENT SPECIFICATION

(45) Date of publication of patent specification: 17.01.90

(51) Int. Cl.$^5$: H 01 M 6/14, H 01 M 4/90

(21) Application number: 85905016.3

(22) Date of filing: 19.09.85

(86) International application number: PCT/US85/01787

(87) International publication number: WO 86/01940 27.03.86 Gazette 86/07

(54) ## HIGH RATE METAL OXYHALIDE CELLS.

(30) Priority: 19.09.84 US 652362

(43) Date of publication of application: 01.10.86 Bulletin 86/40

(45) Publication of the grant of the patent: 17.01.90 Bulletin 90/03

(84) Designated Contracting States: CH DE FR GB LI NL

(56) References cited:
DE-A-2 052 955
GB-A-2 108 312
US-A-4 469 763

Extended Abstracts, volume 83, no. 2, 9-14 October 1983, Washington, D.C., (US) F. Walsh et al.:"An improved Li/SoII2 battery", abstract no. 33, see pages 54, 55

(73) Proprietor: HONEYWELL INC.
Honeywell Plaza
Minneapolis Minnesota 55408 (US)

(72) Inventor: DODDAPANENI, Narayan
700 Vance Drive
Glenside, PA 19038 (US)

(74) Representative: Rentzsch, Heinz et al
Honeywell Europe S.A. Holding KG Patent- und Lizenzabteilung Kaiserleistrasse 55
D-6050 Offenbach am Main (DE)

EP 0 195 818 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

Field of the Invention

The present invention relates generally to the field of non-aqueous electrochemical cells and, more particularly to a class of catalysts for the reduction of oxyhalide depolarizers such as $SOCl_2$ and $SO_2Cl_2$ in such cells.

Description of the Prior Art

Much work has been done in the field of high energy battery systems utilizing highly reactive anode materials such as alkali or alkaline earth metals in combination with a non-aqueous electrolyte. The electrolyte is normally composed of a solute which is commonly a metal salt or a complex metal salt of the anode metal dissolved in a compatible non-aqueous solvent depolarizer such as $SO_2$, $SOCl_2$, or $SO_2Cl_2$. An inert cathode, usually of carbon black, is also used in such cells.

The potential of electrochemical couples, such as those mentioned above as high rate, high-power batteries, has not been fully realized mainly because of excessive cathode polarization particularly at high discharge rates and low operating temperatures. This causes a deterioration of cell performance after a short period of operation. For this reason, much research has been conducted concerning the development of additives such as catalysts to reduce the cathode depolarizer, thereby improving the rate capability of the cathodes.

Some improvement in the rate capability of these carbon cathodes has been achieved by doping them with metals such as platinum or metal halides. However, high amounts of the metals or metal halides are required to effectively increase the rate capability of cells such as Li/$SOCl_2$ cells. Also, the cell performance of these dopants deteriorates with thinner electrodes and at the higher temperatures required for certain applications. More recently, metal-phthalocyanine complexes have been shown to possess significant catalytic activity for the electrochemical reduction of solvent depolarizers such as thionyl chloride or sulfural chloride, thereby increasing cell capacity. Examples of such are found in US—A 4,252,875 and 4,405,693.

The invention relates in particular to a non-aqueous electrochemical cell according to the precharacterizing portion of claim 1. A cell of this type is described in US—A 4,469,763 where a lithium oxyhalide battery has an anode containing lithium, calcium or a combination thereof, a non-aqueous electrolyte containing an oxyhalide such as thionyl chloride, sulfuryl chloride or phosphorous oxychloride and a cathode, with a tetraaza-(14)-annulene complex added to the cathode.

The need still exists for the provision of catalyzed cathodes for cells such as Li/$SOCl_2$ cells which are stable and effective over a wide temperature range and which are sufficiently stable in the cell to be used in bothy active and reserve configurations. The invention solves this problem by the features as characterized in claim 1. Preferred embodiments are described in the subclaims.

Summary of the Invention

By means of the present invention, improved catalysts for the reduction of oxyhalide depolarizers such as $SOCl_2$ and $SO_2Cl_2$ are provided which are easier to prepare and less expensive than phthalocyanine complexes and which are generally more stable in the cell environment. These catalysts are macrocyclic complexes of Schiff's base prepared by the reaction of 5-methyl isophthalaldehyde with a diamino alkane. The preferred embodiments include binuclear metal macrocyclic complexes of 5-methyl isophthalaldehyde and 1,3-diaminopropane having a structure such as

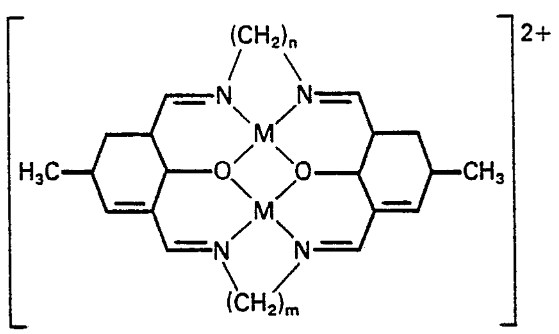

where M represents iron or cobalt and m and n represent integers.

Brief Description of the Drawings

In the drawings:

FIGURE 1 is a graphical representation of the discharge characteristics of a Li/$SOCl_2$ cell employing prior art catalysts cobalt phthalocyanine (CoPc) and iron phthalocyanine (FePc) dissolved in the electrolyte compared with the uncatalyzed baseline.

FIGURE 2 is a graphical representation showing the discharge characteristics of a Li/$SOCl_2$ cell using mononuclear CoSB catalyst compared with the uncatalyzed baseline.

FIGURE 3 is a graphical representation of polarization characteristics of a Li/$SOCl_2$ cell using binuclear metal complexes FeMac and CoMac of the invention;

FIGURE 4 is a graphical representation of the discharge characteristics of a cell of FIGURE 2 at 23°C and 63°C with and without CoSB.

Description of the Preferred Embodiments

The syntheses of FeMac (iron macrocyclic complex) and CoMac (cobalt macrocyclic complex) were carried out using the method of Pilkington et al, Australian Journal of Chemistry Vol. 23, 2225 (1970). The syntheses of CoSB (cobalt Schiff's base complex) and FeSB (iron Schiff's base complex) were carried out using a method described in Jahnke et al, Topics in Current Chemistry, Vol. 1, 133 (1979).

Example 1

A solution of 5-methyl isophthalaldehyde (0,05 mole) dissolved in the minimum volume of boiling methanol was added to a suspension formed by mixing 1,3-diaminopropane (0.05M) with a saturated solution of cobalt chloride in methanol. The mixture was heated under reflux for 1 hour. Methanol was removed by boiling at atmospheric pressure. The product was poured into ten times its volume of tetrahydrofuran. The product was filtered, washed with water and dried.

Example 2

The process of Example 1 was repeated except that iron chloride was substituted for cobalt chloride of Example 1.

The process of Examples 1 and 2 produced binuclear metal macrocyclic complexes CoMac and FeMac, respectively, of the following structure:

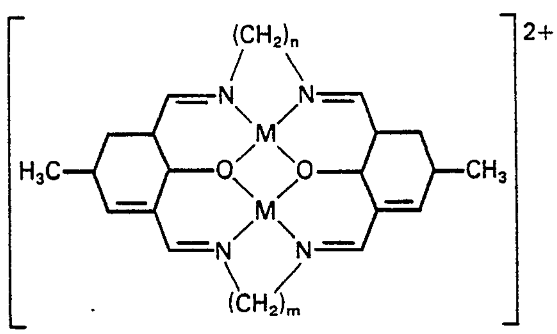

where M represents iron or cobalt and m and n are integers.

FIGURE 1 shows the discharge characteristics of prior art cells using cobalt phthalocyanine (CoPc) and iron phthalocyanine (FePc) catalysts dissolved in the electrolyte. It should be noted that the FePc exhibits a somewhat higher catalytic activity. FIGURES 2—4 show data derived using the catalysts of the present invention.

In FIGURES 2—4, the discharge characteristics of Li/$SOCl_2$ cells catalyzed by various metal macrocyclic complexes are compared to an uncatalyzed cell. All catalyzed cells showed substantial improvement in both cell voltage and specific cathode capacity over the uncatalyzed cell. These complexes have shown as good or better catalytic activity for the reduction of $SOCl_2$ than the iron phthalocyanine catalyst. In the case of metal phthalocyanine catalysts, FePc showed the best catalytic activity, whereas, cobalt tetraphenylporphyrin (CoTPP) and cobalt Schiff's base complexes (CoSB) possess superior catalytic activity for $SOCl_2$ reduction than the iron complexes of these macrocyclic rings. Electronic charge density on the central metal ion, extent of orbital overlapping backbonding and the nature of the specific interaction of the complex with the carbon surface, are some of the factors that can influence the catalytic activity of these complexes for the reduction of $SOCl_2$. In the case of the binuclear macrocyclic complexes the iron couples appear to be superior.

The operating temperature also appears to influence the catalytic activity. In general, the cell performance improved with catalyzed cells irrespective of operating temperatures and current densities. At low operation temperatures, however, the catalytic activity of cobalt Schiff's base complex is rather reduced but the significance of this behaviour is not yet understood. However, one of the factors could be the specific interaction of the CoSB complex with carbon cathode surface. A better way of impregnating the complex onto carbon should show better results since the performance of cells with this catalyst is drastically improved at high operating temperatures. The catalyst stability is projected to be responsible for the superior performance at high operating temperatures.

**Claims**

1. A non-aqueous electrochemical cell having an active metal anode, a cathode, a non-aqueous electrolyte comprising an oxyhalide depolarizer and an iron of cobalt complex catalyst for the reduction of said depolariser, characterized in that said iron or cobalt complex is a complex of a Schiff's base which is a macrocyclic complex of 5-methyl isophthalaldehyde and a diamino alkane.

2. A cell of claim 1, characterized in that said diamino alkane is 1,3-diaminopropane and wherein said metal complex is binuclear.

3. A cell according to claim 1 or 2, characterized by a lithium anode, a carbon cathode and a non-aqueous electrolyte comprising $LiAlCl_4$ salt in $SOCl_2$ depolarizer solvent.

**Patentansprüche**

1. Wasserfreie elektrochemische Zelle mit einer Aktivmetallanode, einer Kathode, einem wasserfreien Elektrolyten mit einem Oxyhalid-Depolarisator sowie einem Eisen- oder Kobeltkomplexkatalysator zur Reduktion des Depolarisators, dadurch gekennzeichnet, daß der Eisen- oder Kobaltkomplex ein Komplex einer Schiff'schen Base ist, welche ein makrozyklischer Komplex von 5-Methyl-Isophthalaldehyd und Diaminoalkan ist.

2. Zelle nach Anspruch 1, dadurch gekennzeichnet, daß das Diaminoalkan 1,3-Diaminopropan und der Metallkomplex binuklear ist.

3. Zelle nach Anspruch 1 oder 2, gekennzeichnet durch eine Lithiumanode, eine Kohlenstoffkathode sowie einen wasserfreien Elektrolyten mit $LiAlCl_4$-Salz in einem $SOCl_2$-Depolarisator-Lösungsmittel.

**Revendications**

1. Une cellule électrochimique non-aqueuse présentant une anode active en métal, une cathode, une électrolyte non-aqueux comportant un dépolarisant oxyhalogénure et un catalyseur à base de complex de fer ou de cobalt pour la réduction dudit dépolarisant, caractérisée en ce que ledit complexe de fer ou de cobalt est un complexe d'une base de Schiff que est un complexe macrocyclique de 5-méthyl-isophthalaldehyde et d'un diamino alcane.

2. Une cellule de la revendication 1, caractérisée en ce que ledit diamino alcane est le 1,3-diaminopropane et dans laquelle ledit complexe métallique est bi-nucléaire.

3. Une cellule selon la revendication 1 ou 2, caractérisée par une anode en lithium, une cathode en carbone et un électrolyte non-aqueux comportant un sel de $LiAlCl_4$ dans un solvant dépolarisant à base de $SOCl_2$.

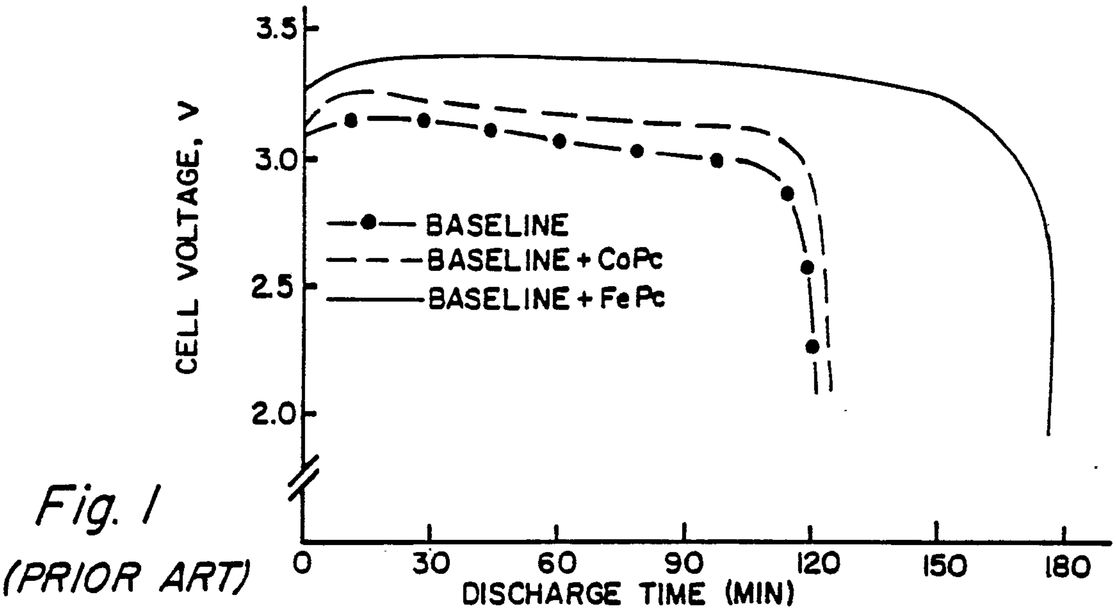


*Fig. 1*
*(PRIOR ART)*

Li/$SOCl_2$ CELLS W/0.5mm CATHODES, CONSTANT CURRENT DENSITY OF 10 mA/$cm^2$.
1.5 M $LiAlCl_4$/$SOCl_2$, 23° C.

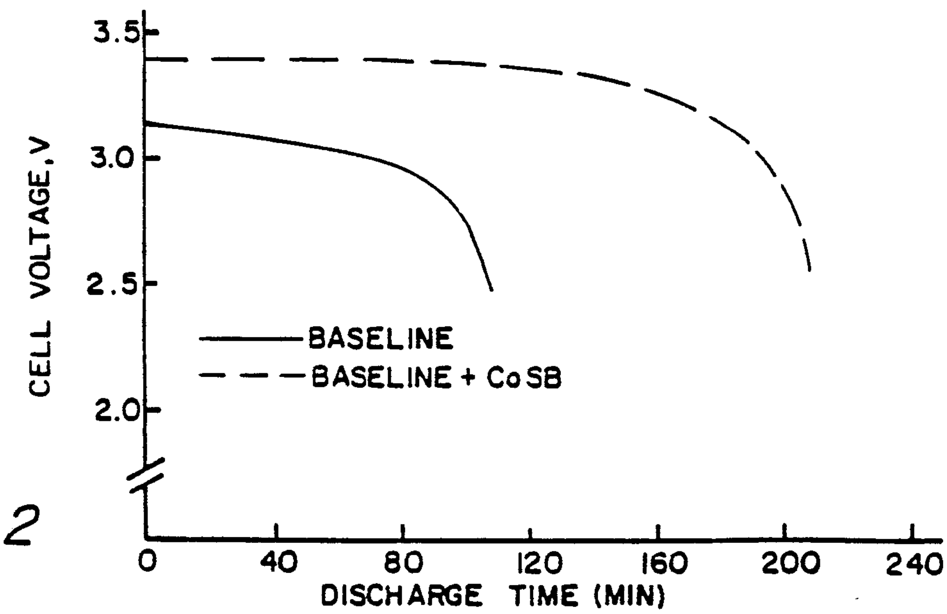


*Fig. 2*

Li/$SOCl_2$ 3-PLATE LAB CELLS W/0.5mm CATHODES, CONSTANT CURRENT DENSITY OF 9mA/$cm^2$.
1.5 M $LiAlCl_4$/$SOCl_2$, 4.5° C.

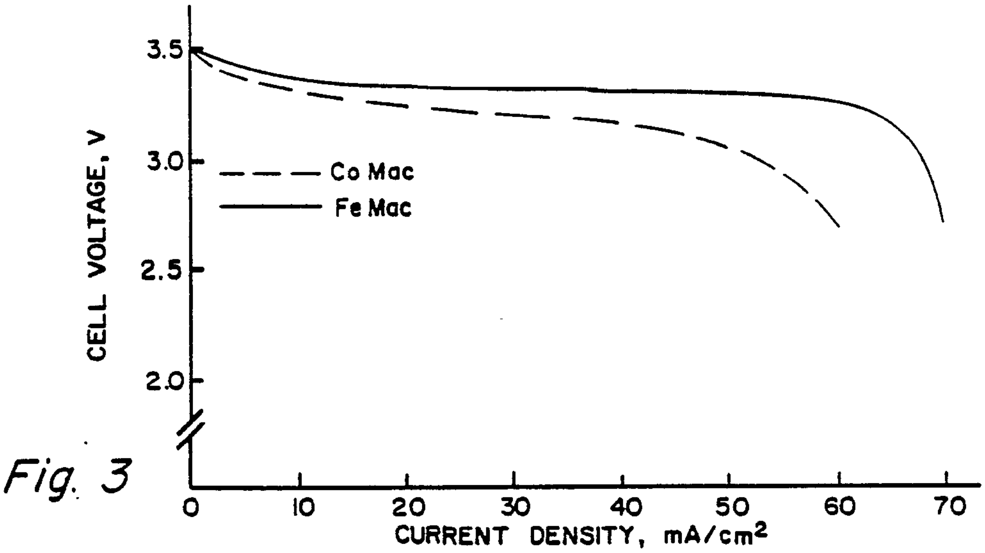


Fig. 3

Li/$SOCl_2$ LAB CELLS W/0.5 mm CATHODES.
1.5 M $LiAlCl_4$/$SOCl_2$, 23° C.

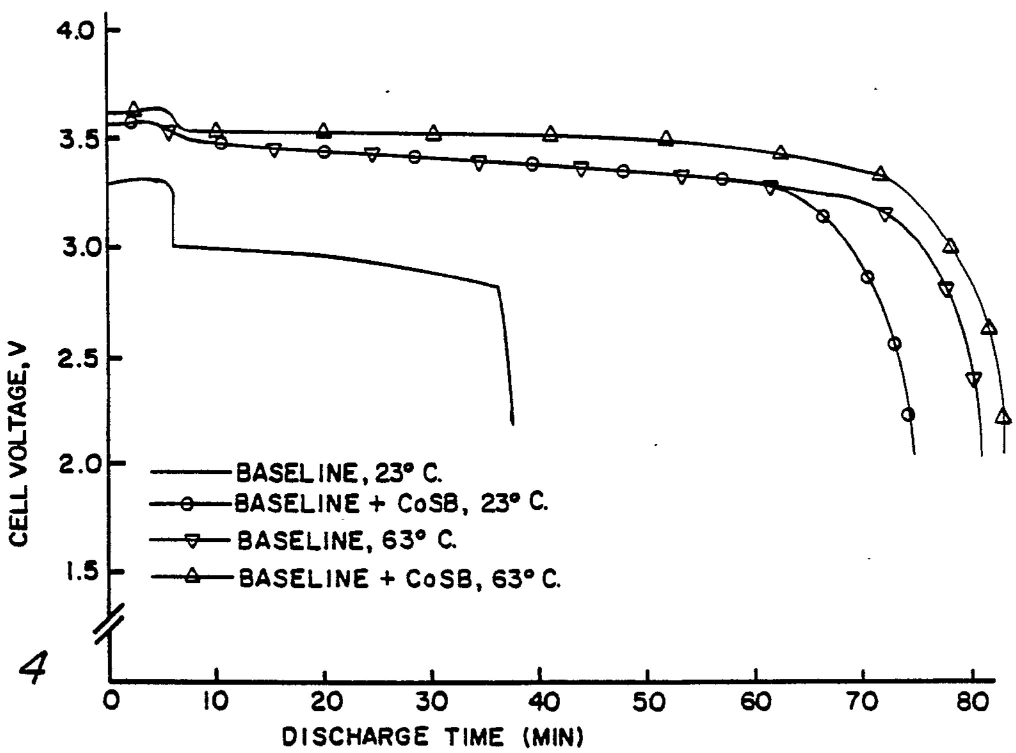


Fig. 4

Li/$SOCl_2$ CELLS WITH (1.0M $AlCl_3$ + 0.5M $LiAlCl_4$)/$SOCl_2$
AT 30mA/cm².